# EUROPÄISCHE PATENTSCHRIFT

(11) **EP 2 298 523 B1**
(45) Veröffentlichungstag und Bekanntmachung des Hinweises auf die Patenterteilung: **04.04.2012**
(21) Anmeldenummer: 10174468.8
(22) Anmeldetag: 30.08.2010
(51) Int. Cl.: C08L 7/00, B60C 1/00, B29B 17/00, C08L 9/00, C08L 21/00

(54) **Kautschukmischung**
Rubber compound
Mélange de caoutchouc

(30) Priorität: 16.09.2009 DE 102009044023
(43) Veröffentlichungstag der Anmeldung: 23.03.2011
(73) Patentinhaber: Continental Reifen Deutschland GmbH, 30165 Hannover (DE)
(72) Erfinder: Butterweck, Frank, 34513, Waldeck Sachsenhausen (DE); Huneck, Bernd, 34497, Korbach (DE); Grosche, Bernd, 34516, Vöhl Marienhagen (DE); Rose, Christoph, Dr., 30982 Pattensen (DE); De Risi, Francesca, Dr., 30161, Hannover (DE); Müller, Lena, 31604, Raddestorf (DE); Meissner, Steffi, 31552, Rodenberg (DE); Sonnenberg, Lars, 22087 Hamburg (DE); Weinreich, Hajo, Dr., 31552, Apelern (DE)
(74) Vertreter: Finger, Karsten

(56) Entgegenhaltungen:
- EP-A1- 1 584 492
- EP-A2- 0 931 809
- WO-A1-2006/091080
- WO-A2-2005/042278
- US-A- 5 840 908

## Beschreibung

Die Erfindung betrifft eine schwefelvernetzbare Kautschukmischung, enthaltend zumindest einen Dienkautschuk, Regenerat und Vulkanisationsbeschleuniger. Die Erfindung betrifft ferner einen Fahrzeugluftreifen, der zumindest zum Teil aus einer mit Schwefel vulkanisierten Kautschukmischung besteht.

Es ist seit langem üblich, als Verarbeitungshilfsmittel und zur Mischungsverbilligung Regenerat in Kautschukmischungen für Reifen einzusetzen. Regenerat ist dabei der durch Anwendung von Hitze, chemischen Agenzien und eventuell mechanischer Energie über Depolymerisation und Spaltung der Schwefelbrücken vom elastischen wieder in den plastischen Zustand überführte Gummiabfall.

Die Zudosierung von Regenerat zu Kautschukmischungen beeinflusst sowohl die physikalischen Eigenschaften der resultierenden Vulkanisate als auch die Vemetzungskinetik. Um diesen Effekten entgegen zu wirken, ist es bekannt, entweder das Vulkanisationssystem anzupassen oder die Polymer- und Rußkonzentration anzupassen (s. W. Hofmann, H. Gupta, Handbuch der Kautschuk-Technologie, Dr. Gupta Verlag, Ratingen, 2001, Kap. 16, S. 34-41).

Lässt man Polymer- und Rußkonzentration unverändert, verschlechtern sich bei Zudosierung von mehr als 5 Gew.-teilen, bezogen auf 100 Gew.-teile Dienkautschuk, die Eigenschaften Zugfestigkeit und Bruchdehnung, die Rückprallelastizität und die Shore-A-Härte sinken. Die Vulkanisation ist stark beschleunigt. Das Verarbeitungsverhalten wird durch die schnelle Anvulkanisation stark beeinträchtigt. Der schnellen Anvulkanisation kann durch Austausch eines Vulkanisationsbeschleunigers mit schneller Anvulkanisation wie Benzothiazyl-2-cyclohexyl-sulfenamid (CBS) durch einen Vulkanisationsbeschleuniger mit einer stark verzögerten Anvulkanisation, wie Benzothiazyl-2-dicyclohexyl-sulfenamid (DCBS), entgegengewirkt werden, jedoch ergeben sich bei dem äquimolaren Austausch von CBS gegen DCBS geringere Vernetzungsdichten, die sich in einer niedrigeren Rückprallelastizität und einem verringerten Modul widerspiegeln.

Der Erfindung liegt nun die Aufgabe zugrunde, eine Kautschukmischung mit einem hohen Regeneratanteil bereitzustellen, die durch eine angemessene Anvulkanisationsgeschwindigkeit eine gute Verarbeitbarkeit der Mischung gewährleistet und gute Vulkanisateigenschaften zeigt.

Gelöst wird die Aufgabe erfindungsgemäß dadurch, dass die Kautschukmischung
- zumindest einen Dienkautschuk,
- mehr als 5 Gew.-teile, bezogen auf 100 Gew.-teile des Dienkautschuks oder der Dienkautschuke, Regenerat,
- mehr als 0,5 Gew.-teile, bezogen auf 100 Gew.-teile des Dienkautschuks oder der Dienkautschuke, Benzothiazyl-2-dicyclohexyl-sulfenamid (DCBS) als Vulkanisationsbeschleuniger und
- mehr als 0,25 Gew.-teile, bezogen auf 100 Gew.-teile des Dienkautschuks oder der Dienkautschuke, zumindest eines weiteren Vulkanisationsbeschleunigers aus der Gruppe der Sulfenamidbeschleuniger und/oder der Gruppe der Sulfenimidbeschleuniger enthält.

Die Menge an Regenerat und der anderen Zuschlagstoffe wird auf 100 Gew.-teile des oder der in der Mischung vorhandenen (anderen) Dienkautschuke bezogen. Das Regenerat wird dabei nicht mitgerechnet, obwohl es Dienkautschukbruchstücke enthält.

Es wurde festgestellt, dass durch die spezielle Kombination von mehr als 0,5 Gew.-teilen, Benzothiazyl-2-dicyclohexyl-sulfenamid (DCBS) mit mehr als 0,25 Gew.-teilen zumindest eines weiteren Vulkanisationsbeschleunigers aus der Gruppe der Sulfenamidbeschleuniger und/oder der Gruppe der Sulfenimidbeschleuniger in Gegenwart größerer Mengen an Regenerat sich hinsichtlich der physikalischen Eigenschaften Shore-Härte, Rückprallelastizität, Zugfestigkeit und Bruchdehnung ein positiver synergistischer Effekt ergibt, wobei gleichzeitig die Vulkanisationskinetik derart verbessert wird, dass eine gute Verarbeitbarkeit gewährleistet ist.

Die schwefelvernetzbare Kautschukmischung enthält zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien (10-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann.

Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk, Ethylen-Propylen-Dien-Kautschuk (EPDM) oder modifizierte Dienkautschuke enthalten. Die modifizierten Dienkautschuke können auf lösungs- oder emulsionpolymerisiertem Styrol-Butadienkautschuk basieren. Bei der Modifizierung kann es sich um solche mit Hydroxylgruppen und/oder Epoxygruppen und/oder Organosiliziumgruppen und/oder Aminogruppen und/oder Aminosiloxan und/oder Carboxylgruppen und/oder Phthalocyaningruppen handeln.

Zu 100 Gew.-teilen Dienkautschuk werden erfindungsgemäß mehr als 5 Gew.-teile Regenerat addiert. Um die Mischung bei guter Verarbeitbarkeit und guten physikalischen Eigenschaften weiter hinsichtlich Ökonomie und Ökologie zu verbessern, enthält die Kautschukmischung vorzugsweise 10 bis 50 Gew.-teile, bezogen auf 100 Gew.-teile des Dienkautschuks oder der Dienkautschuke, Regenerat.

Gemäß einer bevorzugten Weiterbildung der Erfindung basiert das Regenerat auf einer Mischung, die mehr als 75 phr Naturkautschuk enthält. Derartige Regenerate lassen sich besonders gut wieder vernetzen und ergeben ein gleichmäßiges Netzwerk mit guten Vulkanisateigenschaften.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die erfindungsgemäße Kautschukmischung enthält als Vulkanisationsbeschleuniger Benzothiazyl-2-dicyclohexyl-sulfenamid (DCBS) und zumindest einen weiteren Vulkanisationsbeschleuniger aus der Gruppe der Sulfenamidbeschleuniger und/oder der Gruppe der Sulfenimidbeschleuniger.

Die Sulfenamidbeschleuniger, auch Benzothiazolsulfenamid-Beschleuniger genannt, leiten sich vom 2-Mercaptobenzothiazol ab, indem an den Mercaptan-Schwefel ein Amin oxidativ gebunden wird. Die einzelnen Beschleuniger unterscheiden sich in der Art des verwendeten Amins voneinander. Zu den Sulfenamidbeschleunigern zählen - neben dem Benzothiazyl-2-dicyclohexyl-sulfenamid (DCBS) - Benzothiazyl-2-cyclohexyl-sulfenamid (CBS), Benzothiazyl-2-tert-butyl-sulfenamid (TBBS), Benzothiazyl-2-sulfenmorpholid (MBS), Benzothiazyl-2-i.-propyl-sulfenamid (DIBS) und Benzothiazyl-2-dibenzylsulfenamid (DBzBS). Sulfenimidbeschleuniger sind Benzothiazolsulfenimide wie z. B. N-tert-Butyl-2-benzothiazolsulfenimid (TBSI).

Benzothiazyl-2-dicyclohexyl-sulfenamid (DCBS) kann also in Kombination mit einem oder mehreren der anderen Beschleuniger aus der Gruppe der Sulfenamidbeschleuniger und/oder der Gruppe der Sulfenimidbeschleuniger eingesetzt werden. Besonders gute Ergebnisse hinsichtlich der Sicherheit bei der Anvulkanisation und den Eigenschaften der Vulkanisate werden erzielt, wenn Benzothiazyl-2-dicyclohexyl-sulfenamid (DCBS) in Kombination mit Benzothiazyl-2-cyclohexyl-sulfenamid (CBS) eingesetzt wird.

Um im Zusammenspiel mit Regenerat in der Kautschukmischung eine besonders hohe Verarbeitungssicherheit zu erzielen, liegen das Benzothiazyl-2-dicyclohexyl-sulfenamid und der bzw. die weitere(n) Vulkanisationsbeschleuniger aus der Gruppe der Sulfenamidbeschleuniger und/oder der Gruppe der Sulfenimidbeschleuniger in einem molaren Verhältnis von 1:4 bis 4:1 vor.

Die Kautschukmischung kann als Füllstoff Ruß und/oder Kieselsäure in üblichen Mengen enthalten.

Die verwendeten Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und Iodadsorptionszahl (gemäß ASTM D 1510) 10 bis 250 g/kg. Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN 66131 und 66132) von 35 bis 350 m²/g, vorzugsweise von 145 bis 270 m²/g und eine CTAB-Oberfläche (gemäß ASTM D 3765) von 30 bis 350 m²/g, vorzugsweise von 120 bis 285 m²/g, aufweist. Derartige Kieselsäuren führen z. B. in Kautschukmischungen für Reifenlaufstreifen zu besonders guten physikalischen Eigenschaften der Vulkanisate. Außerdem können sich Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs VN3 (Handelsname) der Firma Degussa als auch hoch dispergierte Kieselsäuren, so genannte HD-Kieselsäuren (z. B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Silan-Kupplungsagenzien werden in Mengen von 0,2 bis 30 Gewichtsteilen, vorzugsweise 1 bis 15 Gewichtsteilen, bezogen auf 100 Gewichtsteile Füllstoff, insbesondere Kieselsäure, eingesetzt, da dann eine optimale Anbindung des Füllstoffes an den oder die Kautschuke erfolgen kann.

Die Kautschukmischung kann außerdem noch andere Füllstoffe, wie beispielsweise Alumosilicate, Kreide, Stärke, Magnesiumoxid, Titandioxid oder Kautschukgele enthalten.

Des Weiteren kann die erfindungsgemäße Kautschukmischung übliche Zusatzstoffe in üblichen Gewichtsteilen enthalten. Zu diesen Zusatzstoffen zählen Weichmacher (z. B. aromatische, naphthenische oder paraffinische Mineralölweichmacher, MES (mild extraction solvate) oder TDAE (treated distillate aromatic extract) oder flüssige Polymere, wie z. B. flüssiges Polybutadien), Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel und/oder Schwefelspender werden im letzten Mischungsschritt in den vom Fachmann gebräuchlichen Mengen der Kautschukmischung zugesetzt. Gemäß einer bevorzugten Weiterbildung der Erfindung enthält die Kautschukmischung 1 bis 8 Gew.-teile, bezogen auf 100 Gew.-teile des Dienkautschuks oder der Dienkautschuke, unlöslichen Schwefel. Dies bewirkt in der erfindungsgemäßen Kautschukmischung einer gute Einarbeitbarkeit und eine gute Dispersion des Schwefels, verbunden mit einem besonders gleichmäßigen Netzwerk nach der Vulkanisation.

In der Kautschukmischung können außerdem noch Vulkanisationsverzögerer (z. B. N-Cyclohexylthiophthalimid, CTP) und Vulkanisationsaktivatoren in üblichen Mengen enthalten sein.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht.

Die Mischung kann für verschiedene Gummiartikel wie Riemen, Gurte, Förderbänder oder Schläuche eingesetzt werden. Vorzugsweise wird sie für unterschiedliche Reifenbauteile wie die Seitenwand, die Innenseele, den Kernreiter und/oder das Hornprofil eingesetzt. Dabei werden übliche Reifenherstellungsverfahren eingesetzt.

Die Erfindung soll nun anhand von Vergleichs- und Ausführungsbeispielen, die in der Tabelle 1 zusammengefasst sind, näher erläutert werden.

Die Vergleichsmischungen sind mit V, die erfindungsgemäße Mischung ist mit E gekennzeichnet. In den Mischungen der Tabelle 1 wurde die Zudosierung von Regenerat, DCBS und CBS variiert. Der Austausch der Beschleuniger erfolgte äquimolar.

Die Mischungsherstellung erfolgte unter üblichen Bedingungen in zwei Stufen in einem Labortangentialmischer. Es wurden die Umsatzzeiten bis zum Erreichen der relativen Vemetzungsgrade von 10, 40 und 90 % (t₁₀, t₄₀, t₉₀) über ein rotorloses Vulkameter (MDR = Moving Disc Rheometer) gemäß DIN 53 529 ermittelt. Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur gemäß DIN 53 512
- Zugfestigkeit bei Raumtemperatur gemäß DIN 53 504
- Reißdehnung bei Raumtemperatur gemäß DIN 53 504

**Tabelle 1**

| **Bestandteile** | **Einheit** | **1(V)** | **2(V)** | **3(V)** | **4(V)** | **5(V)** | **6(E)** |
|---|---|---|---|---|---|---|---|
| Naturkautschuk | Gew.-teile | 51 | 51 | 51 | 51 | 51 | 51 |
| BR^{a} | Gew.-teile | 16 | 16 | 16 | 16 | 16 | 16 |
| E-SBR^{b} | Gew.-teile | 33 | 33 | 33 | 33 | 33 | 33 |
| Regenerat^{c} | Gew.-teile | - | - | - | 30 | 30 | 30 |
| RußN339 | Gew.-teile | 28,2 | 28,2 | 28,2 | 28,2 | 28,2 | 28,2 |
| Weichmacheröl | Gew-teile | 13 | 13 | 13 | 13 | 13 | 13 |
| Alterungsschutzmittel | Gew.-teile | 5,2 | 5,2 | 5,2 | 5,2 | 5,2 | 5,2 |
| Harz | Gew.-teile | 2 | 2 | 2 | 2 | 2 | 2 |
| Ozonschutzwachs | Gew.-teile | 2 | 2 | 2 | 2 | 2 | 2 |
| Zinkoxid | Gew.-teile | 2,5 | 2,5 | 2,5 | 2,5 | 2,5 | 2,5 |
| Stearinsäure | Gew.-teile | 2,1 | 2,1 | 2,1 | 2,1 | 2,1 | 2,1 |
| CBS | Gew.-teile | 0,9 | - | 0,4 | 0,9 | - | 0,4 |
| DCBS | Gew.-teile | - | 1,2 | 0,66 | - | 1,2 | 0,66 |
| unlöslicher Schwefel | Gew.-teile | 3,3 | 3,3 | 3,3 | 3,3 | 3,3 | 3,3 |
| Verzögerer CTP | Gew.-teile | 0,3 | 0,3 | 0,3 | 0,3 | 0,3 | 0,3 |

| **Eigenschaften** | | | | | | | |
|---|---|---|---|---|---|---|---|
| t₁₀ | min | 4,1 | 4,5 | 4,4 | 2,7 | 3,1 | 2,9 |
| t₄₀ | min | 5,6 | 7,6 | 6,7 | 3,8 | 5,1 | 4,4 |
| t₉₀ | min | 9,5 | 13,7 | 11,8 | 6,8 | 9,6 | 8,4 |
| Shore-A-Härte | Shore A | 40,8 | 40,1 | 41,0 | 42,4 | 43,6 | 40,7 |
| Rückprallelastizität | % | 50,8 | 49,6 | 50,0 | 46,2 | 46,02 | 46,6 |
| Zugfestigkeit | N/mm² | 13,8 | 13,0 | 13,1 | 9,5 | 11,3 | 11,1 |
| Reißdehnung | % | 700 | 759 | 736 | 631 | 657 | 717 |

| | | | | | | | |
|---|---|---|---|---|---|---|---|
| ^{a}High-cis Polybutadien ^{b} emulsionspolymerisiertes Styrol-Butadien-Copolymer, Styrolgehalt: 23,5 Gew.-%, Vinylanteil ca. 13 %, ESBR 1500, DOW Chemicals, USA ^{c}Regenerat basierend auf Altreifen, GR555, Gajurat Reclaim & Rubber Products Ltd., Indien | | | | | | | |

Aus der Tabelle 1 wird ersichtlich, dass die Zudosierung von 30 Gew.-teilen Regenerat (4(V)) eine starke Beschleunigung der Anvulkanisation bewirkt. Gleichzeitig wird die Härte erhöht und Rückprallelastizität, Zugfestigkeit und Bruchdehnung nehmen ab. Tauscht man CBS äquimolar gegen DCBS (4(V) → 5(V)) aus um der schnellen Anvulkanisation entgegenzuwirken, werden bei den physikalischen Eigenschaften noch nicht die gewünschten Zielvorgaben einer möglichst guten Annäherung an die Werte der Mischung 1 (V) erreicht. Überraschenderweise kann dies jedoch durch die Kombination von Regenerat mit DCBS und CBS in den erfindungsgemäßen Mengen erreicht werden, wobei die Effekte hinsichtlich der physikalischen Eigenschaften nicht additiv sind, sondern synergistische Effekte erzielt werden, die im Hinblick auf die Einzelmaßnahmen nicht zu erwarten waren. Beispielsweise nimmt der Härte einer Mischung mit CBS zu, wenn Regenerat zugegeben wird (1(V) → 4(V)). Tauscht man dann CBS gegen DCBS aus (4(V) → 5(V)) nimmt die Härte weiter zu. Setzt man jedoch CBS und DCBS in Kombination ein (5(E)), nimmt die Härte entgegen den Erwartungen wieder ab. In Werksversuchen bestätigte sich die Verarbeitungs- und Scorchsicherheit der erfindungsgemäßen Mischung 6(E), die bei der Mischung 4(V) nicht gegeben war.

Es gelingt so, Mischungen mit einem hohen Anteil an Regenerat bereitzustellen, die sich gut verarbeiten lassen und gute Vulkanisateigenschaften zeigen.

## Patentansprüche

1. Schwefelvernetzbare Kautschukmischung, enthaltend
- zumindest einen Dienkautschuk,
- mehr als 5 Gew.-teile, bezogen auf 100 Gew.-teile des Dienkautschuks oder der Dienkautschuke, Regenerat,
- mehr als 0,5 Gew.-teile, bezogen auf 100 Gew.-teile des Dienkautschuks oder der Dienkautschuke, Benzothiazyl-2-dicyclohexyl-sulfenamid (DCBS) als Vulkanisationsbeschleuniger und
- mehr als 0,25 Gew.-teile, bezogen auf 100 Gew.-teile des Dienkautschuks oder der Dienkautschuke, zumindest eines weiteren Vulkanisationsbeschleunigers aus der Gruppe der Sulfenamidbeschleuniger und/oder der Gruppe der Sulfenimidbeschleuniger.

2. Kautschukmischung nach Anspruch 1, **dadurch gekennzeichnet, dass** sie 10 bis 50 Gew.-teile, bezogen auf 100 Gew.-teile des Dienkautschuks oder der Dienkautschuke, Regenerat enthält.

3. Kautschukmischung nach Anspruch 1 oder 2, **dadurch gekennzeichnet, dass** das Regenerat auf einer Mischung basiert, die mehr als 75 phr Naturkautschuk enthält.

4. Kautschukmischung nach zumindest einem der vorhergehenden Ansprüche, **dadurch gekennzeichnet, dass** der weitere Vulkanisationsbeschleuniger aus der Gruppe der Sulfenamidbeschleuniger Benzothiazyl-2-cyclohexyl-sulfenamid (CBS) ist.

5. Kautschukmischung nach zumindest einem der vorhergehenden Ansprüche, **dadurch gekennzeichnet, dass** Benzothiazyl-2-dicyclohexyl-sulfenamid und der bzw. die weitere(n) Vulkanisationsbeschleuniger aus der Gruppe der Sulfenamidbeschleuniger und/oder der Gruppe der Sulfenimidbeschleuniger in einem molaren Verhältnis von 1:4 bis 4:1 vorliegen.

6. Kautschukmischung nach zumindest einem der vorhergehenden Ansprüche, **dadurch gekennzeichnet, dass** sie 1 bis 8 Gew.-teile, bezogen auf 100 Gew.-teile des Dienkautschuks oder der Dienkautschuke, unlöslichen Schwefel enthält.

7. Fahrzeugluftreifen, der zumindest zum Teil aus einer mit Schwefel vernetzten Kautschukmischung nach zumindest einem der Ansprüche 1 bis 6 besteht.

8. Fahrzeugluftreifen nach Anspruch 7, **dadurch gekennzeichnet, dass** die Seitenwand und/oder die Innenseele und/oder der Kernreiter und/oder das Hornprofil aus der mit Schwefel vernetzten Kautschukmischung besteht.

## Claims

1. Sulphur-crosslinkable rubber mixture comprising
- at least one diene rubber,
- more than 5 parts by weight, based on 100 parts by weight of the diene rubber or of the diene rubbers, of regenerated material,
- more than 0.5 part by weight, based on 100 parts by weight of the diene rubber or of the diene rubbers, of benzothiazyl-2-dicyclohexylsulphenamide (DCBS) as vulcanization accelerator and
- more than 0.25 part by weight, based on 100 parts by weight of the diene rubber or of the diene rubbers, of at least one other vulcanization accelerator from the group of the sulphenamide accelerators and/or the group of the sulphenimide accelerators.

2. Rubber mixture according to Claim 1, **characterized in that** it comprises from 10 to 50 parts by weight, based on 100 parts by weight of the diene rubber or of the diene rubbers, of regenerated material.

3. Rubber mixture according to Claim 1 or 2, **characterized in that** the regenerated material is based on a mixture which comprises more than 75 phr of natural rubber.

4. Rubber mixture according at least one of the preceding claims, **characterized in that** the other vulcanization accelerator from the group of the sulphenamide accelerators is benzothiazyl-2-cyclohexylsulphenamide (CBS).

5. Rubber mixture according to at least one of the preceding claims, **characterized in that** benzothiazyl-2-dicyclohexylsulphenamide and the other vulcanization accelerator(s) from the group of the sulphenamide accelerators and/or the group of the sulphenimide accelerators are present in a molar ratio of from 1:4 to 4:1.

6. Rubber mixture according to at least one of the preceding claims, **characterized in that** it comprises from 1 to 8 parts by weight, based on 100 parts by weight of the diene rubber or of the diene rubbers, of insoluble sulphur.

7. Pneumatic tyre which is composed at least to some extent of a sulphur-crosslinked rubber mixture according to at least one of Claims 1 to 6.

8. Pneumatic tyre according to Claim 7, **characterized in that** the side call and/or the inner liner and/or the apex and/or the rimstrip is composed of the sulphur-crosslinked rubber mixture.

## Revendications

1. Mélange de caoutchouc réticulable avec du soufre, contenant :
- au moins un caoutchouc diénique,
- plus de 5 parties en poids, par rapport à 100 parties en poids du caoutchouc diénique ou des caoutchoucs diéniques, d'un matériau régénéré,
- plus de 0,5 partie en poids, par rapport à 100 parties en poids du caoutchouc diénique ou des caoutchoucs diéniques, de benzothiazyl-2-dicyclohexylsulfénamide (DCBS) en tant qu'accélérateur de vulcanisation, et
- plus de 0,25 partie en poids, par rapport à 100 parties en poids du caoutchouc diénique ou des caoutchoucs diéniques, d'au moins un accélérateur de vulcanisation supplémentaire du groupe des accélérateurs sulfénamide et/ou du groupe des accélérateurs sulfénimide.

2. Mélange de caoutchouc selon la revendication 1, **caractérisé en ce qu'**il contient 10 à 50 parties en poids, par rapport à 100 parties en poids du caoutchouc diénique ou des caoutchoucs diéniques, d'un matériau régénéré.

3. Mélange de caoutchouc selon la revendication 1 ou 2, **caractérisé en ce que** le matériau régénéré est à base d'un mélange qui contient plus de 75 pce de caoutchouc naturel.

4. Mélange de caoutchouc selon au moins l'une quelconque des revendications précédentes, **caractérisé en ce que** l'accélérateur de vulcanisation supplémentaire du groupe des accélérateurs sulfénamide est le benzothiazyl-2-cyclohexyl-sulfénamide (CBS).

5. Mélange de caoutchouc selon au moins l'une quelconque des revendications précédentes, **caractérisé en ce que** le benzothiazyl-2-dicyclohexyl-sulfénamide et le ou les accélérateurs de vulcanisation supplémentaires du groupe des accélérateurs sulfénamide et/ou du groupe des accélérateurs sulfénimide sont présents en un rapport molaire de 1:4 à 4:1.

6. Mélange de caoutchouc selon au moins l'une quelconque des revendications précédentes, **caractérisé en ce qu'**il contient 1 à 8 parties en poids, par rapport à 100 parties en poids du caoutchouc diénique ou des caoutchoucs diéniques, de soufre non soluble.

7. Pneu pour véhicule, qui est constitué au moins en partie d'un mélange de caoutchouc réticulé avec du soufre selon au moins l'une quelconque des revendications 1 à 6.

8. Pneu pour véhicule selon la revendication 7, **caractérisé en ce que** le flanc et/ou le revêtement intérieur et/ou le bourrage sur tringle et/ou le profilé de flasque sont constitués du mélange de caoutchouc réticulé avec du soufre.
